# FASCICULE DE BREVET EUROPEEN

(11) **EP 2 750 228 B1**
(45) Date de publication et mention de la délivrance du brevet: **02.09.2015**
(21) Numéro de dépôt: 13199620.9
(22) Date de dépôt: 26.12.2013
(51) Int. Cl.: H01M 8/00, H01M 8/02, H01M 8/24

(54) **Connecteur pour cellules de pile à combustible et procédé de mise en oeuvre**
Interkonnektor für Brennstoffzellen, und entsprechendes Umsetzungsverfahren
Connector for fuel cells and method for implementing same

(30) Priorité: 28.12.2012 FR 1203613
(43) Date de publication de la demande: 02.07.2014
(73) Titulaire: Paxitech, 38130 Echirolles (FR)
(72) Inventeur: Mosdale, Renaut, 38640 Claix (FR); Andrada, Séverine, 38500 La Buisse (FR)
(74) Mandataire: Thibon, Laurent

(56) Documents cités:
- EP-A1- 2 061 114
- JP-A- 2005 268 039
- JP-A- 2010 182 451
- JP-A- 2011 233 342
- US-A1- 2004 018 415
- US-A1- 2006 115 706
- US-A1- 2008 261 088
- US-A1- 2008 299 435
- US-A1- 2010 068 562

## Description

### Domaine de l'invention

La présente invention concerne les piles à combustible et plus particulièrement un connecteur électriquement conducteur pour électrodes de cellules unitaires d'une pile à combustible fonctionnant notamment avec du dihydrogène et du dioxygène.

### Exposé de l'art antérieur

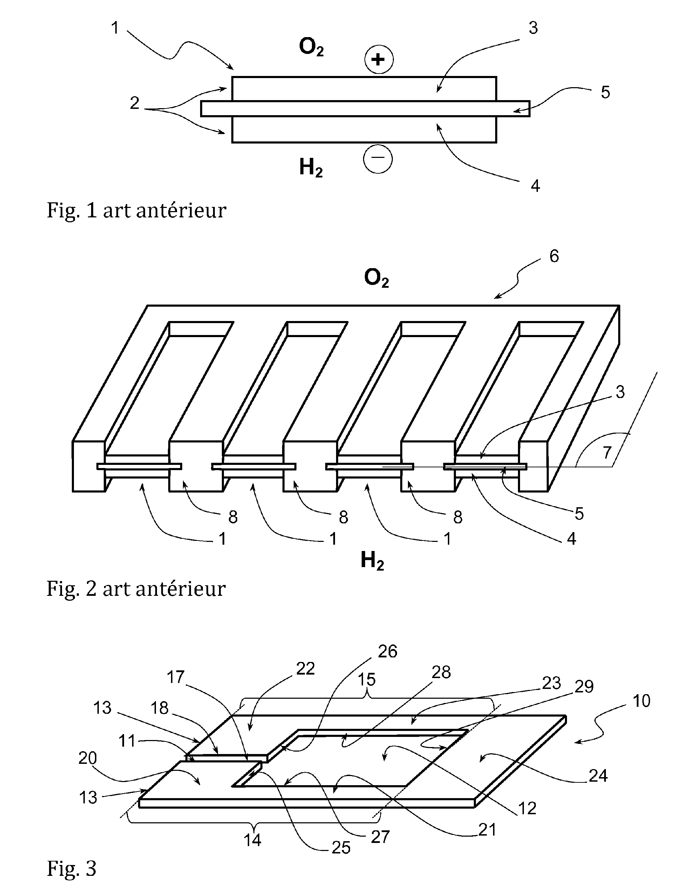

Les piles à combustible permettent, à partir d'un carburant et d'un comburant, de générer directement du courant électrique. De nombreux types de piles à combustible existent. Nous prendrons, à titre d'exemple, une pile fonctionnant avec du dihydrogène et avec du dioxygène. Une telle pile à combustible est généralement constituée de plusieurs cellules unitaires qui sont connectées électriquement en parallèle pour pouvoir délivrer un courant important et/ou en série pour augmenter la tension disponible aux bornes de la pile. La figure 1 est une vue schématique en coupe d'une cellule unitaire connue de l'art antérieur. La cellule unitaire 1 est composée d'un couple 2 de deux électrodes en regard : une cathode 3 ; une anode 4. La cathode 3 est séparée de l'anode 4 par une membrane 5 à échange de protons, par exemple, un polymère synthétique de type NAFION® produit par la société DuPont™, d'environ 50 µm d'épaisseur. L'anode 4 et la cathode 3 peuvent être constituées d'un feutre conducteur du courant électrique, catalytique et poreux au dihydrogène et au dioxygène. Le dihydrogène H₂ est amené sur l'anode 4 et le dioxygène O₂ est amené sur la cathode 3. Par effet catalytique, les molécules gazeuses de dioxygène O₂ et de dihydrogène H₂ se dissocient, produisant une accumulation de protons (H⁺) sur la cathode 3 et d'électrons (e⁻) sur l'anode 4. Un courant électrique peut alors être collecté par des conducteurs de l'électricité -non représentés- posés sur la cathode 3 et l'anode 4.

La figure 2 est une vue schématique en perspective d'une pile à combustible 6 d'architecture planaire selon l'art antérieur. Elle comporte plusieurs cellules unitaires 1, telles que décrites en relation avec la figure 1, situées sur une surface médiane 7, par exemple plane. Les cellules unitaires 1 de la pile planaire 6 sont isolées les unes des autres par des murs isolants 8 d'isolation électrique.
Le document JP 2010 182451 A2 fait également parti de l'état de la technique et décrit une pile à combustible d'architecture planaire où un premier contact/volet est appliqué à une première électrode supérieure, un second contact/volet est appliqué à une deuxième électrode inférieure et un troisième contact/base relie les deux premiers contacts. Le document JP 2010 182451 A2 divulgue donc le préambule de la revendication indépendante 1 du présent document.

### Résumé

Un objet de la présente invention est de prévoir un système de connexion électrique permettant la connexion électrique de cellules unitaires d'une pile à combustible, notamment d'une pile planaire, de sorte à pallier tout ou partie les inconvénients des systèmes de connexions électriques existants.

Un autre objet de la présente invention est de prévoir des connexions électriques fiables pouvant être mises en oeuvre de façon économique sur un ensemble de cellules unitaires notamment reliées mécaniquement entre-elles.

Un autre objet de la présente invention est de connecter électriquement en série deux cellules unitaires d'une pile à combustible de type planaire.

Ainsi, un mode de réalisation de la présente invention prévoit un module comprenant une bande de piles à combustible ayant chacune une électrode supérieure et une électrode inférieure, une électrode supérieure d'une pile étant reliée électriquement à une électrode inférieure d'une pile adjacente par un connecteur comprenant :
une base,
deux bras s'étendant dans une même direction à partir de deux bords externes de la base, deux volets s'étendant l'un vers l'autre à partir d'extrémités des bras opposées à leur liaison avec la base, caractérisé en ce que : l'écartement entre les deux bras est supérieur ou égal à la largeur de la bande, et les deux volets sont appliqués sur une électrode supérieure ou inférieure, et la base est appliquée sur une électrode supérieure ou inférieure.

La présente demande vise aussi une pile à combustible comportant le module de cellules unitaires susmentionné.

La présente demande vise aussi un procédé d'interconnexion de cellules unitaires.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue en coupe d'une cellule unitaire pour pile à combustible, selon l'art antérieur décrit ci-dessus ;
la figure 2 est une vue schématique en perspective d'une coupe d'une pile à combustible planaire selon l'art antérieur décrit ci-dessus ;
la figure 3 est une vue en perspective d'un connecteur électrique mis en oeuvre dans un module selon la présente invention ;
les figures 4A et 4B sont des vues en perspective respectivement d'un module de deux cellules unitaires et du connecteur ;
la figure 4C est une vue en perspective d'un connecteur mis en oeuvre dans un module selon la présente invention monté sur des cellules unitaires ; et
les figures 5A et 5B sont des vues respectivement de dessus et de face d'un module de quatre cellules unitaires muni d'un connecteur.

### Description détaillée

Par souci de clarté, de mêmes éléments ont été désignés par de mêmes références aux différentes figures qui ont été tracées sans respect d'échelle. Par souci de clarté, seuls les éléments utiles à la compréhension de l'invention ont été représentés et seront décrits. En particulier, le mode de réalisation d'une cellule unitaire pour pile à combustible est connu de l'homme du métier, et ne sera pas décrit.

La figure 3 est une vue en perspective d'un connecteur 10 électriquement conducteur pour électrodes d'une pile à combustible. Sur cette figure 3, le connecteur 10 est dans une position dite initiale dans laquelle il est sensiblement plat. L'épaisseur du connecteur 10 peut être comprise entre 20 µm et 5 mm et, de préférence, entre 50 µm et 150 µm. La forme extérieure du connecteur 10 est, par exemple, sensiblement parallélépipédique. Par exemple, le connecteur 10 peut être réalisé en feutre de connexion comportant des fibres métalliques, par exemple en acier inoxydable. Ainsi, le connecteur 10 est à la fois perméable aux gaz et conducteur de l'électricité. La résistivité du connecteur 10 est, par exemple, comprise entre 1x10⁻⁴ Ω.cm et 5x10⁻² Ω.cm et de préférence entre 1x10⁻⁴ Ω.cm et 5x10⁻³ Ω.cm. Le connecteur 10 est naturellement déformable, sensiblement élastique et rigide. L'homme de l'art saura ajuster, notamment par essais successifs, la composition et la préparation du feutre de connexion de façon à optimiser ses paramètres physiques, en particulier sa rigidité et son élasticité, en vue de l'utilisation du feutre de connexion dans le cadre de la présente invention.

Le connecteur 10 comprend une fente 11 et une lumière 12, chacun de ces deux éléments traversant le connecteur 10 dans le sens de son épaisseur. La fente 11 relie un bord interrompu externe 13 du connecteur 10 à la lumière 12 de sorte à délimiter un premier élément 14 et un deuxième élément 15 du connecteur 10. Il faut comprendre que la fente 11 est ouverte à ses deux extrémités.

Selon un mode d'exécution, le connecteur comporte des premier 20, deuxième 22 et troisième 24 éléments de contact et des premier et deuxième éléments de liaison ou bras 21 et 23. Les premier et deuxième éléments de contact constituent des premier et deuxième volets 20, 22. Les premier et deuxième volets sont attachés au troisième élément de contact ou base 24 au moyen des premier 21 et deuxième 23 bras dont chacun est relié à la base 24. De préférence, le connecteur 10 est monobloc, autrement dit il peut être formé à partir d'un feutre de connexion découpé de manière idoine.

La lumière 12, par exemple rectangulaire et située vers la partie centrale du connecteur 10, est délimitée et bordée :
- pour un premier côté de la lumière 12, par un premier bord interne 25 appartenant au premier élément de contact 20 et par un deuxième bord interne 26 appartenant au deuxième élément de contact 22 ;
- pour des deuxième et troisième côtés de la lumière 12 s'étendant respectivement à des extrémités opposées du premier côté, par un premier flanc interne 27 appartenant au premier bras 21 et par un deuxième flanc interne 28 appartenant au deuxième bras 23 ; et
- pour un quatrième côté de la lumière opposé au premier coté, par un troisième bord interne 29 appartenant au troisième élément de contact 24.

Autrement dit, la lumière 12 est délimitée par : les premier 25, deuxième 26 et troisième 29 bords internes du connecteur 10 associés respectivement aux premier et deuxième volets 20, 22 et à la base 24 ; les premier 27 et deuxième 28 flancs internes du connecteur 10 associés respectivement aux premier et deuxième bras 21 et 23.

Des première 17 et deuxième 18 parois de la fente 11 rejoignent le bord interrompu externe 13 du connecteur 10 respectivement aux premier 25 et deuxième 26 bords internes du connecteur 10.

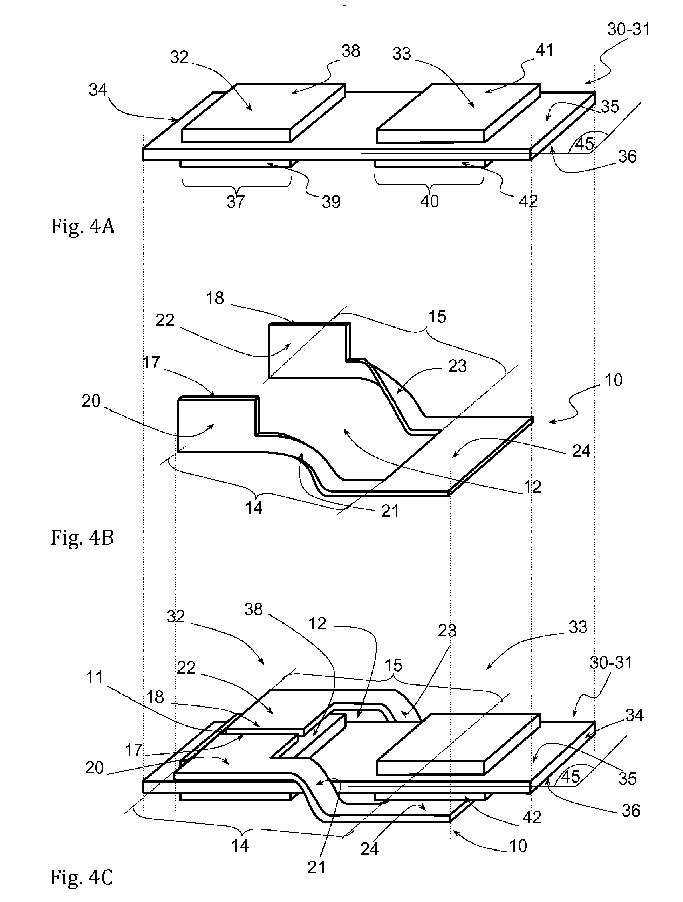

La figure 4A est une vue en perspective d'un module 30 de deux cellules unitaires d'une bande de cellules pour pile à combustible 31, par exemple planaire. Le module 30 comporte une première cellule unitaire 32 et une deuxième cellule unitaire 33 constituant, pour partie, la pile à combustible 31. Le module 30 comporte une membrane 34 d'échange de protons pour pile à combustible. La membrane 34 est, par exemple, délimitée par deux faces sensiblement parallèles. Les points équidistants des deux faces de la membrane définissent une surface médiane 45 de la pile à combustible 31 planaire. La membrane 34 comporte une face supérieure 35 et une face inférieure 36 situées, dans l'exemple, de part et d'autre de la surface médiane 45. La première cellule unitaire 32 comprend un premier couple 37 d'électrodes disposées en regard et comportant une première électrode supérieure 38 située du côté de la face supérieure 35 de la membrane 34 et une première électrode inférieure 39 située du côté de la face inférieure 36 de la membrane 34. La deuxième cellule unitaire 33 comprend un deuxième couple 40 d'électrodes disposées en regard et comportant une deuxième électrode supérieure 41 située du côté de la face supérieure 35 de la membrane 34 et une deuxième électrode inférieure 42 située du côté de la face inférieure 36 de la membrane 34. Lorsque le connecteur 10 équipe un tel module, la première électrode supérieure 38 est reliée électriquement à la deuxième électrode inférieure 42 au moyen du connecteur 10.

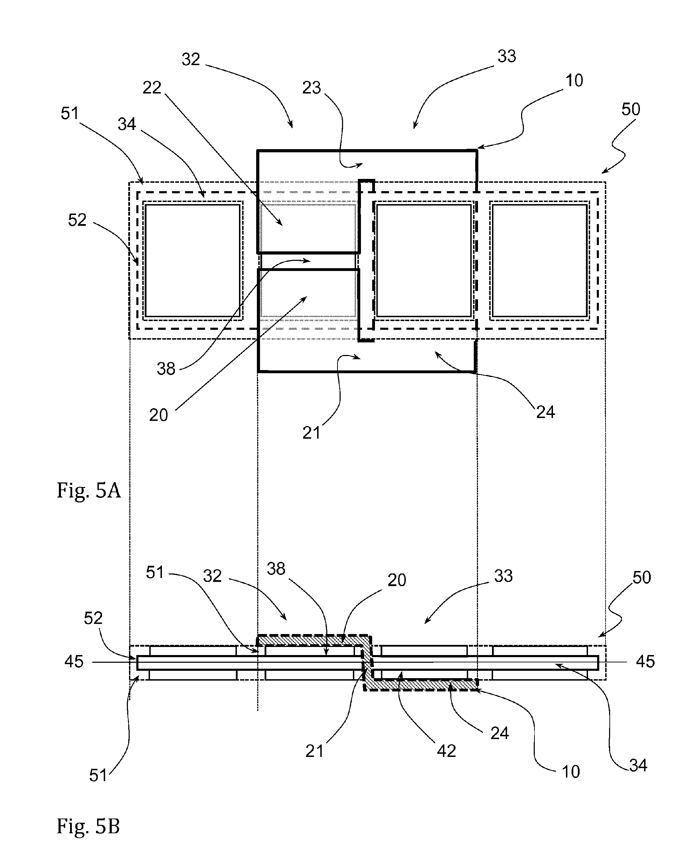

De manière avantageuse, un isolant, ionique et électrique, entoure les électrodes des cellules unitaires 32 et 33. Pour des raisons de clarté cet isolant n'est pas représenté sur la figure 4A. La description et la mise en oeuvre de l'isolant électrique et ionique seront faites ci-dessous en relation avec les figures 5A et 5B. Les cellules unitaires ont des géométries usuellement employées pour les piles à combustible. Par exemple, pour une pile fonctionnant avec du dioxygène et du dihydrogène, l'épaisseur de la membrane 34 est d'environ 50 µm, l'épaisseur des électrodes en feutre est d'environ 250 µm. Les électrodes ont une surface comprise entre 0,3 cm² et 20 cm². La distance entre deux électrodes adjacentes situées d'un même côté de la membrane 34 est supérieure à 0,5 mm, la distance entre une électrode et chaque bord de la membrane 34 est supérieure à 0,3 mm. Toutes ces dimensions sont données à titre illustratif et ne doivent pas être considérées comme limitant le domaine d'application de la présente invention.

La figure 4B est une vue en perspective, dans une position d'insertion du connecteur 10 précédemment décrit en relation avec la figure 3. Dans cet exemple, le connecteur 10 a subi une déformation afin de pouvoir être mis en place sur le module 30 de deux cellules unitaires décrit en relation avec la figure 4A. Les premier et deuxième bras 21 et 23 sont avantageusement déformables de sorte à rendre mobiles les premier et deuxième volets 20, 22 par rapport à la base 24. Ainsi, les premier et deuxième volets peuvent comporter une position fermée et une position ouverte (figure 4B) dans laquelle les premier et deuxième volets sont plus éloignés l'un de l'autre que dans la position fermée. La figure 4B est une vue d'un exemple d'une position ouverte des premier et deuxième volets pour laquelle la distance entre les deux volets 20 et 22 est suffisamment grande pour permettre l'introduction du module 30 de deux cellules unitaires dans la lumière 12 du connecteur 10 en utilisant un passage agrandi, créé par la déformation du connecteur 10, entre les parois 17, 18 écartées de la fente 11.

La figure 4C est une vue en perspective du connecteur 10, décrit ci-dessus en relation avec les figures 3 et 4B, monté sur le module 30 de deux cellules unitaires, décrit ci-dessus en relation avec la figure 4A. Le procédé de montage du connecteur 10 pour électrodes sur le module 30 comporte, par exemple, les étapes suivantes :
- former un ensemble 30, par exemple de la première 32 et de la deuxième 33 cellules unitaires décrites ci-dessus en relation avec la figure 4A ;
- prévoir un connecteur 10 tel que décrit en relation avec la figure 3 ;
- écarter les parois 17, 18, délimitant la fente 11, de sorte à permettre l'introduction de l'ensemble 30 de cellules unitaires 32, 33 entre les bras 21, 23 ;
- introduire l'ensemble 30 de cellules unitaires 32, 33 dans la lumière 12 à partir des parois 17, 18 écartées ;
- rapprocher les parois 17, 18 écartées après l'étape d'introduction ;
- appliquer au moins une partie des premier et deuxième volets sur la première électrode supérieure 38 située sur la face supérieure 35 de la membrane 34 ; et
- appliquer la base 24 du connecteur 10 sur la deuxième électrode inférieure 42 située sur la face inférieure 36 de la membrane 34.

Le connecteur 10, monté sur les cellules unitaires 32, 33 du module 30 de la pile à combustible 31, est dans une position fonctionnelle qui correspond à la position fermée des premier et deuxième volets. Par rapport à la position d'insertion du connecteur 10 représentée par la figure 4B, la position fonctionnelle du connecteur 10 se caractérise, d'une part, par un rapprochement des première 17 et deuxième 18 parois de la fente 11 et, d'autre part, par un rapprochement des premier 20 et deuxième 22 volets. En outre, pour la position fonctionnelle du connecteur 10, c'est-à-dire dans le cadre du module de cellules unitaires où la première électrode supérieure 38 est reliée électriquement à la deuxième électrode inférieure 42 par le connecteur 10 :
- les premier et deuxième volets 20, 22 sont appliqués sur la première électrode supérieure 38 du module 30 ;
- la base 24 est appliquée sur la deuxième électrode inférieure 42 du module 30 ;
- la lumière 12 du connecteur 10 est traversée par la membrane 34 du module 30 de cellules unitaires ;
- les premier 21 et deuxième 23 bras sont disposés de part et d'autre de la membrane 34.

Dans l'exemple d'une pile à combustible 31 de type planaire, les électrodes inférieures et supérieures se situent de part et d'autre de la surface médiane 45. De chaque côté de cette surface médiane, la membrane 34 est, par exemple, alimentée respectivement par le comburant - par exemple le dioxygène - et par le carburant - par exemple le dihydrogène. Il en résulte que le connecteur 10 réalise une connexion en série des deux cellules unitaires 32, 33 liées mécaniquement entre elles par la membrane 34 commune à échange de protons.

Les figures 5A et 5B sont des vues respectivement de dessus et de face d'un module 50, comprenant une bande de quatre cellules unitaires de la pile à combustible 31 par exemple planaire. Le module 50 comporte, par exemple, les deux cellules unitaires 32, 33 décrites ci-dessus en relation avec la figure 4A.

Le module 50 de quatre cellules comporte la première 32 et la deuxième cellule 33, par exemple en position deux et trois sur l'ensemble des quatre positions occupées par les quatre cellules du module 50. Le module 50 de quatre cellules unitaires comporte par exemple la membrane 34, à échange de protons, commune aux cellules unitaires du module 50. La membrane 34 définit la surface géométrique médiane 45 de la pile à combustible planaire 31 configurée pour utiliser le module 50 de quatre cellules unitaires. Les première 32 et deuxième 33 cellules unitaires sont connectées en série par le connecteur 10 selon la description faite ci-dessus en relation avec la figure 4C. De manière avantageuse le connecteur 10 déborde des bords des électrodes sur lesquelles il assure un contact.

Selon un mode d'exécution applicable à tout ce qui a été dit ci-dessus, le module 30 peut comporter un isolant 51 ionique et électrique disposé sur le pourtour d'une électrode connectée par le connecteur 10, l'isolant adhérant simultanément à la membrane 34, à ladite électrode connectée et au connecteur 10. De manière avantageuse, l'isolant 51 déborde des bords latéraux 52 de la membrane 34. De manière avantageuse, l'isolant 51 ionique et électrique est en contact avec les bords des électrodes, notamment avec les bords de la première électrode supérieure 38 et de la deuxième électrode inférieure 42 connectées au moyen du connecteur 10. De manière avantageuse, les trois éléments de contact 20, 22, 24 du connecteur 10 recouvrent, dans une région bordant les électrodes des cellules connectées, l'isolant 51 sur une distance s'étendant de chacune des électrodes, par exemple, d'au moins 0,8 mm. De manière avantageuse, l'isolant est adhérent sur :
- la membrane 34 à échange de protons ;
- les électrodes 38, 42 des cellules unitaires ainsi que sur les bords de ces électrodes ;
- le connecteur 10 ; et
- un autre isolant de même nature.

Par exemple l'isolant 51 peut être un polymère de type élastomère thermoplastique, comme un polymère styrène-butadiène-styrène connu sous la dénomination polymère SBS. A titre d'exemple, le polymère "KRATON^{™} SBS D" produit par la firme KRATON^{™} convient à la présente invention. D'autres isolants ioniques et électriques peuvent être utilisés.

Le procédé de fabrication du module 50, de quatre cellules unitaires connectées au moyen de plusieurs connecteurs 10, est, par exemple, décrit ci-après. Une première étape consiste à former une bande de quatre cellules unitaires comportant des électrodes disposées de part et d'autre de la membrane 34 d'échange de protons pour pile à combustible. Une deuxième étape consiste à déposer, sur chaque face de la membrane 34, un film d'isolant 51 ionique et électrique de type polymère élastomère thermoplastique, le film étant, par exemple, découpé, à forme contraire des électrodes. De préférence, l'épaisseur du film isolant est sensiblement égale à la hauteur des électrodes, par exemple 250 µm. Une troisième étape consiste à placer le connecteur 10, par exemple en feutre de connexion selon le procédé décrit ci-dessus en relation avec les figures 4A, 4B et 4C. Une quatrième étape consiste à presser, de préférence à chaud, le module 50, pourvu de l'isolant 51 et muni du connecteur 10, de façon à appliquer les éléments de contact 20, 22, 24 du connecteur 10 sur les électrodes 38, 42 des cellules unitaires. La pression de pressage est, par exemple, comprise entre 2 kg.cm⁻² et 20 kg.cm⁻² et de préférence comprise entre 8 kg.cm⁻² et 12 kg.cm⁻². La température, en cas de pressage à chaud, est suffisante pour provoquer la fusion du polymère élastomère thermoplastique constituant l'isolant 51 et, de préférence, comprise entre 120°C et 150°C. Durant cette opération de pressage, l'isolant 51 est rendu plan et de préférence jusqu'à affleurement avec la surface des électrodes. L'isolant 51, durant l'opération de pressage à chaud, est mis en contact avec les bords des électrodes des cellules unitaires du module 50. Consécutivement à l'opération de pressage à chaud, l'isolant 51 adhère simultanément : à la membrane 34 ; aux électrodes 38, 42 connectées par le connecteur 10 ; et au connecteur 10, en particulier dans des zones de recouvrement du connecteur 10 sur l'isolant 51 en bordure d'électrode 38 ou 42. Il en résulte que le connecteur 10 est collé sur le pourtour des électrodes sur lesquelles le connecteur 10 est appliqué. Le feutre de connexion du connecteur 10 est choisi de façon à être suffisamment rigide pour qu'il résulte, de ce collage, une force d'application du feutre de connexion sur l'électrode connectée afin d'assurer un contact électrique fiable. Par effet de collage de l'isolant 51 sur un isolant de même nature, le pourtour de la membrane 34 à échange de protons est encapsulé par l'isolant 51, déposé sur chaque face de la membrane 34 et débordant du bord 52 de la membrane 34. Ainsi, en particulier, les bras 21 et 23 du connecteur 10, se situant latéralement et à distance des bords 52 de la membrane 34, sont isolés de la membrane 34 par l'isolant ionique et électrique 51. Il n'y a pas de risque de corrosion des fibres métalliques contenues dans le connecteur 10.

Des modes de réalisations particuliers de la présente invention ont été décrits. Diverses variantes et modifications apparaîtront à l'homme de l'art. En particulier, le connecteur 10 peut être mis en oeuvre sur un module comportant un grand nombre de cellules unitaires. La réalisation industrielle de piles à combustible utilisant le connecteur 10 est facilitée car il est possible de prévoir un processus industriel comportant, par exemple, trois phases. Durant la première phase, on réalise des bandes comportant des dizaines de cellules unitaires liées entre-elles par une membrane à échange de protons. Dans une deuxième phase, on réalise les connexions électriques au moyen du connecteur 10. Le connecteur 10, peut selon le cas, relier électriquement des électrodes situées de part et d'autre, ou du même côté, de la membrane (34) à échange de protons. Il suffit, dans le cas d'une connexion réalisée sur des électrodes situées d'un même côté de la surface médiane 45, d'appliquer le connecteur 10, en position initiale sans déformation, sur les électrodes. Le même connecteur peut ainsi réaliser des connexions en série ou en parallèle de cellules unitaires. Deux cellules unitaires interconnectées par un même connecteur 10 ne sont pas nécessairement placées consécutivement sur la bande de cellules unitaires, il suffit d'adapter la dimension des bras, dans le sens longitudinal de la bande, à la distance entre les cellules unitaires à interconnecter. Enfin, dans une troisième phase, la bande munie des connecteurs 10 est découpée en modules, d'une pluralité de cellules unitaires, constitutifs de la pile à combustible devant être réalisée.

D'autre part, les formes des électrodes sont quelconques, les éléments de contact pouvant alors prendre une forme adéquate afin de s'adapter à la forme des électrodes. De même la forme de la fente ou d'un bras peuvent varier, tant qu'ils assurent, au moyen de la déformation du connecteur, l'accessibilité de la lumière. Le matériau du bras doit être déformable et conducteur du courant électrique, peu importe qu'il soit réalisé dans le même matériau que les éléments de contact.

Il n'est pas nécessaire que les cellules devant être interconnectées électriquement par le connecteur soient reliées mécaniquement entre elles. La présence de la lumière permet, par exemple, d'insérer, entre deux cellules distinctes, un élément externe mécanique. La fente et la lumière, associées à un connecteur déformable, permettent alors la mise en place du connecteur malgré la présence de cet élément externe.

## Revendications

1. Module (30, 50) comprenant une bande de piles à combustible (32, 33) ayant chacune une électrode supérieure (38, 41) et une électrode inférieure (39, 42), une électrode supérieure d'une pile étant reliée électriquement à une électrode inférieure d'une pile adjacente par un connecteur (10) comprenant : une base (24), deux bras (21, 23) s'étendant dans une même direction à partir de deux bords externes de la base, deux volets (20, 22) s'étendant l'un vers l'autre à partir d'extrémités des bras opposées à leur liaison avec la base,
**caractérisé en ce que** : l'écartement entre les deux bras est supérieur ou égal à la largeur de la bande, et les deux volets (20, 22) sont appliqués sur une électrode supérieure ou inférieure, et la base (24) est appliquée sur une électrode inférieure ou supérieure.

2. Module (30, 50) selon la revendication 1, dans lequel la bande est revêtue d'un matériau adhésif et isolant (51) sur le pourtour des électrodes (38, 39, 41, 42).

3. Module (30, 50) selon la revendication 2, dans lequel l'isolant (51) est un polymère de type élastomère thermoplastique.

4. Module (30, 50) selon la revendication 2, dans lequel l'isolant (51) est un polymère styrène-butadiène-styrène.

5. Module selon l'une quelconque des revendications 1 à 4, dans lequel le connecteur (10) est formé à partir d'une plaque d'un feutre poreux, déformable et électriquement conducteur.

6. Module (30, 50) selon la revendication 5, dans lequel le feutre comporte des fibres métalliques.

7. Module (30, 50) selon la revendication 5 ou 6, dans lequel la plaque de feutre a une épaisseur comprise entre 20 µm et 5 mm, de préférence comprise entre 50 µm et 150 µm.

8. Pile à combustible (31) comportant un module (30, 50) selon l'une au moins des revendications 1 à 7.

9. Procédé d'interconnexion de cellules unitaires (32, 33) d'un module (30, 50) comprenant une bande de piles à combustible ayant chacune une électrode supérieure (38, 41) et une électrode inférieure (39, 42) respectivement situées sur la face supérieure (35) et la face inférieure (36) d'une membrane (34), et comportant les étapes suivantes :
disposer, sur deux faces opposées de la membrane (34), une couche d'un matériau isolant (51) de type polymère élastomère thermoplastique de façon à laisser les électrodes accessibles ;
prévoir un connecteur (10) formé à partir d'une plaque d'un feutre poreux, déformable et électriquement conducteur et comprenant :
une base (24),
deux bras (21, 23) s'étendant dans une même direction à partir de deux bords externes de la base (24),
deux volets (20, 22) s'étendant l'un vers l'autre à partir d'extrémités des bras (21, 23) opposées à leur liaison avec la base (24) et dans lequel l'écartement entre les deux bras (21, 23) est supérieur ou égal à la largeur de la bande (34) ;
introduire ledit module (30, 50) entre les deux bras du connecteur (10), afin d'amener une électrode d'une pile en contact avec la base et une électrode opposée d'une pile adjacente en contact avec les deux volets du connecteur ; et
exercer une pression, de préférence avec apport de calories, perpendiculairement à la membrane (34) sur des faces opposées dudit module (30) de façon à faire adhérer la base et les deux volets du connecteur au film isolant (51).

10. Procédé d'interconnexion selon la revendication 9, dont l'étape d'introduction dudit module (30, 50) entre les deux bras (21, 23) du connecteur (10) comporte les étapes suivantes :
écarter les deux bras (21, 23) du connecteur ;
introduire le module (30, 50) entre les deux bras ;
rapprocher les deux bras ;
appliquer au moins une partie des premier (14) et/ou deuxième (15) volets du connecteur (10) sur une première électrode située (38) sur la face supérieure (35) de la membrane (34) ; et
appliquer au moins une partie de la base du connecteur (10), sur une électrode adjacente située sur la face inférieure (36) de la membrane (34).

## Patentansprüche

1. Ein Modul (30, 50) welches folgendes aufweist:
einen Streifen von Brennstoffzellen (32, 33) deren jede eine obere Elektrode (38, 41) und eine untere Elektrode (39, 42) aufweist, eine obere Elektrode einer Zelle elektrisch verbunden mit einer unteren Elektrode einer benachbarten Zelle durch einen Verbinder (10) der folgendes aufweist: eine Basis (24), zwei Arme (21, 23) die sich in einer gleichen Richtung von zwei Außenkanten der Basis erstrecken, zwei Klappen (20, 22) die sich zueinander hin von Enden der Arme entgegengesetzt zu ihrer Verbindung mit der Basis erstrecken,
**dadurch gekennzeichnet, dass** der Abstand zwischen den zwei Armen größer als oder gleich der Breite des Streifens ist und dass die zwei Klappen (20, 22) auf einer oberen oder unteren Elektrode anliegen und dass die Basis (24) an einer unteren oder oberen Elektrode anliegt.

2. Das Modul (30, 50) nach Anspruch 1, wobei der Streifen mit einem klebenden und isolierenden Material (51) auf dem Umfang der Elektroden (38, 39, 41, 42) beschichtet ist.

3. Das Modul (30, 50) nach Anspruch 2, wobei der Isolator (51) ein Polymer des thermoplastischen Elastomertyps ist.

4. Das Modul (30, 50) nach Anspruch 2, wobei der Isolator (51) ein Styrol-Butadien-Styrol Polymer ist.

5. Das Modul nach einem der Ansprüche 1-4, wobei der Verbinder (10) von einer Platte aus porösen, deformierbarem und elektrisch leitendem Filz gebildet ist.

6. Das Modul (30, 50) nach Anspruch 5, wobei der Filz Metallfasern aufweist.

7. Das Modul (30, 50) nach Anspruch 5 oder 6, wobei die Filzplatte eine Dicke im Bereich von 20 µm bis 5 mm besitzt, und zwar vorzugsweise von 50 µm bis 150 µm.

8. Eine Brennstoffzelle (31), die das Modul (30, 50) nach mindestens einem der Ansprüche 1-7 aufweist.

9. Ein Verfahren zur Zwischenverbindung von Einheitszellen (32, 33) eines Moduls (30, 50) das einen Streifen von Brennstoffzellen aufweist deren jede eine obere Elektrode (38, 41) und eine untere Elektrode (39, 42) aufweist, und zwar angeordnet auf der oberen Oberfläche (35) bzw. der unteren Oberfläche (36) eines Streifens (34) wobei die folgenden Schritte vorgesehen sind:
Anordnen auf den zwei entgegengesetzten Oberflächen des Streifens (34), einer Schicht aus einem Isoliermaterial (51) des thermoplastischen Elastomer-Polymertyps, um die Elektroden zugänglich zu lassen;
Vorsehen eines Verbinders (10) geformt aus einer Platte eines porösen, deformierbaren und elektrisch leitenden Filzes und zwar folgendes aufweisend:
eine Basis (24);
zwei Arme (21, 23) die sich in einer gleichen Richtung von zwei externen Kanten der Basis (24) aus erstrecken;
zwei Klappen (20, 22) die sich zueinander hin von Enden der Arme (21, 23) entgegengesetzt zu ihrer Verbindung mit der Basis (24) erstrecken und wobei der Abstand zwischen den zwei Armen (21, 23) größer ist als oder gleich der Breite des Streifens (34);
Einführen des erwähnten Moduls (30, 50) zwischen die zwei Arme des Verbinders (10) um eine Elektrode einer Zelle in Kontakt mit der Basis und eine entgegengesetzte Elektrode einer benachbarten Zelle in Kontakt mit den zwei Klappen des Verbinders zu bringen; und
Ausüben eines Drucks, vorzugsweise mit einer Wärmezuführung und senkrecht zu dem Streifen (34) auf entgegengesetzten Oberflächen des Moduls (30) um die Basis und die zwei Klappen des Verbinders zum Anhaften an dem Isolierfilm (51) zu bringen.

10. Das Zwischenverbindungsverfahren nach Anspruch 9, wobei der Schritt der Einführung des Moduls (30, 50) zwischen die zwei Arme (21, 23) des Verbinders (10) die folgenden Schritte aufweist:
Beabstanden der zwei Arme (21, 23) des Verbinders voneinander; Einführen des Moduls (30, 50) zwischen die zwei Arme;
Näher zusammenbringen der zwei Arme;
Anbringen von mindestens einem Teil der ersten (14) und/oder zweiten (15) Klappen des Verbinders (10) auf einer ersten Elektrode (38) angeordnet auf eine Oberfläche (35) des Moduls (34); und
Anbringen von mindestens einem Teil der Basis des Verbinders (10) auf einer Elektrode angeordnet auf der unteren Oberfläche (36) des Streifens (34).

## Claims

1. A module (30, 50) comprising a strip of fuel cells (32, 33) each having an upper electrode (38, 41) and a lower electrode (39, 42), an upper electrode of a cell being electrically connected to a lower electrode of an adjacent cell by a connector (10) comprising: a base (24), two arms (21, 23) extending in a same direction from two external edges of the base, two flaps (20, 22) extending towards each other from ends of the arms opposed to their connection with the base,
**characterized in that** the spacing between the two arms is greater than or equal to the width of the strip, and the two flaps (20, 22) are applied on an upper or lower electrode, and the base (24) is applied on a lower or upper electrode.

2. The module (30, 50) of claim 1, wherein the strip is coated with an adhesive and insulating material (51) on the periphery of the electrodes (38, 39, 41, 42).

3. The module (30, 50) of claim 2, wherein the insulator (51) is a polymer of thermoplastic elastomer type.

4. The module (30, 50) of claim 2, wherein the insulator (51) is a styrene-butadiene-styrene polymer.

5. The module of any of claims 1 to 4, wherein the connector (10) is formed from a plate of a porous, deformable, and electrically-conductive felt.

6. The module (30, 50) of claim 5, wherein the felt comprises metal fibers.

7. The module (30, 50) of claim 5 or 6, wherein the felt plate has a thickness in the range from 20 µm to 5 mm, preferably from 50 µm to 150 µm.

8. A fuel cell (31) comprising the module (30, 50) of one at least of claims 1 to 7.

9. A method of interconnecting unit cells (32, 33) of a module (30, 50) comprising a strip of fuel cells, each having an upper electrode (38, 41) and a lower electrode (39, 42) respectively disposed on the upper surface (35) and the lower surface (36) of a strip (34), comprising the steps of:
arranging, on two opposite surfaces of the strip (34), a layer of an insulating material (51) of thermoplastic elastomer polymer type to leave the electrodes accessible;
providing a connector (10) formed from a plate of a porous, deformable, and electrically-conductive felt, and comprising:
a base (24);
two arms (21, 23) extending in a same direction from two external edges of the base (24),
two flaps (20, 22) extending towards each other from ends of the arms (21, 23) opposed to their connection with the base (24) and wherein the spacing between the two arms (21, 23) is greater than or equal to the width of strip (34);
introducing said module (30, 50) between the two arms of the connector (10), to bring an electrode of a cell in contact with the base and an opposite electrode of an adjacent cell in contact with the two flaps of the connector; and
exerting a pressure, preferably with a heat input, perpendicularly to the strip (34) on opposite surfaces of said module (30) to have the base and the two flaps of the connector adhere to the insulating film (51).

10. The interconnection method of claim 9, wherein the step of introducing said module (30, 50) between the two arms (21, 23) of the connector (10) comprises the steps of:
spacing apart the two arms (21, 23) of the connector;
introducing the module (30, 50) between the two arms;
bringing the two arms back together;
applying at least a portion of the first (14) and/or second (15) flaps of the connector (10) on a first electrode (38) located on a surface (35) of the module (34); and
applying at least a portion of the base of the connector (10) on an electrode arranged on the lower surface (36) of the strip (34).
